# EUROPÄISCHE PATENTSCHRIFT

(11) **EP 2 604 989 B1**
(45) Veröffentlichungstag und Bekanntmachung des Hinweises auf die Patenterteilung: **10.01.2018**
(21) Anmeldenummer: 12007950.4
(22) Anmeldetag: 26.11.2012
(51) Int. Cl.: G01L 19/00, G01L 19/06, G01L 19/14

(54) **Molchfähiger Rohrdruckmittler**
Piggable pipe pressure mediator
Médiateur de pression pour tuyaux adapté au racleur

(30) Priorität: 13.12.2011 DE 102011120828
(43) Veröffentlichungstag der Anmeldung: 19.06.2013
(73) Patentinhaber: Armaturenbau GmbH, 46487 Wesel-Ginderich (DE)
(72) Erfinder: Vetter, Bernd, 08315 Bernsbach (DE)
(74) Vertreter: Demski, Siegfried

(56) Entgegenhaltungen:
- DE-A1- 3 613 204
- DE-A1- 3 713 105
- DE-A1- 3 924 740
- DE-A1- 19 720 848
- DE-B3-102005 016 812
- US-A- 3 163 529
- US-A- 4 534 224

## Beschreibung

Die Erfindung betrifft einen Rohrdruckmittler, welcher zum Einbau in eine Rohrleitung verwendet werden kann, bestehend aus einem rohrförmigen ein- oder mehrteiligen Druckmittlergehäuseteil endseitigen Flanschanschlüssen und einer innenliegenden Membran, welche einem Membranbett gegenüberliegt und einen Druckraum einschließt.

Gattungsgemäße Rohrdruckmittler werden in vielen Bereichen der Technik und der Produktion benötigt, um den Druck in medienführenden Rohren zu analysieren. Die Rohrdruckmittler bestehen hierbei aus einem annähernd runden Druckmittlergehäuse, welches mit endseitigen Flanschanschlüssen versehen ist, damit der Rohrdruckmittler in eine vorhandene Leitungsführung eingebaut werden kann. Hierbei wird in der Regel darauf geachtet, dass die lichte Weite der Rohrdruckmittler an die lichte Weite der Rohrleitungen angepasst ist. Zur Messung des Druckes besitzt das Druckmittlergehäuse eine Ausnehmung, die zur Ausbildung eines Druckraumes vorgesehen ist. Die Ausnehmung selbst wird durch eine annähernd rohrförmige Membran abgedichtet, wobei die Membran entweder mit dem Druckmittlergehäuse verlötet, verschweißt oder gegebenenfalls verklebt wird. Die Membran kann sich hierbei über den axialen Bereich der Ausnehmung erstrecken oder gegebenenfalls über die gesamte Länge der Rohrdruckmittlers. Zwischen der Membran und dem Druckmittlergehäuse im Bereich der Ausnehmung entsteht somit ein ringförmiger Raum, der als Druckraum benötigt wird. Dieser Druckraum wird im Weiteren über einen Stichkanal mit einem Messgerät oder einer elektronischen Messeinheit verbunden, sodass sich ergebende Druckänderungen unmittelbar durch das Medium im Druckraum auf das Messerwerk übertragen werden können. Hierbei wird darauf geachtet, dass das druckübertragende Medium und der zu messende Messstoff voneinander getrennt sind, um mögliche Verunreinigungen, beispielsweise von Gasen oder Nahrungsmitteln zu verhindern.

Um eine optimale Auslenkung der Membran zu erzielen, kann diese eine unrunde Form oder tangentiale Abschrägungen aufweisen, sodass der Druckraum je nach Anwendungszweck entsprechend vergrößert wird. In einzelnen Fällen werden auch Membranen eingesetzt, die eine annähernd vom Kreisring abweichende mehrkantige Form aufweisen.

Speziell in der Nahrungsmittelindustrie müssen die Rohrleitungen und Rohrdruckmittler immer wieder einem Reinigungsprozess unterzogen werden. Hierzu wird vorzugsweise ein Molch verwendet, welcher mit Druck durch das Rohrleitungssystem getrieben wird. Dieser Druck kann beispielsweise durch eine Reinigungsflüssigkeit oder auch durch das zu transportierende Medium erzeugt werden. Die Molche bestehen hierbei aus einem in der Regel schlanken Mittelteil, welches endseitig, ähnlich wie bei einer Hantel jeweils eine Verdickung aufweist, die an den Nenndurchmesser der Rohrleitungen angepasst ist. Die endseitigen Verdickungen dienen hierbei vorzugsweise dazu, die Rohrleitungen von vorhandenen Verschmutzungen oder anhaftenden Messstoffen zu befreien. Aufgrund von unterschiedlichen Geometrien der verwendeten Membranen führt dies immer wieder zu der Problematik, dass der Molch im Bereich der Rohrdruckmittler stecken bleibt. Dieses Problem tritt besonders häufig auf, wenn langbauende Rohrdruckmittler eingesetzt werden, während demgegenüber der Molch eine kürzere Bauweise aufweist. Die entstehenden Probleme im Bereich einer aufweitbaren Membran können beispielsweise dazu führen, dass der Molch im Bereich der Ausnehmung stecken bleibt und durch einen Druckaufbau nicht weiter transportiert werden kann. Ein weiteres Problem entsteht durch die hohe Elastizität der Membran, sodass bei einem abdichtenden und durchfahrenden Molch innerhalb der Rohrleitung die Membran in Transportrichtung mitsamt dem dahinter befindlichen Übertragungsmedium verformt wird und durch den entstehenden Staudruck der Molch stecken bleibt, oder die Membran dauerhaft verformt wird. Darüber hinaus wird durch derartige Verformungen die Lebensdauer der Membran deutlich reduziert.

Aus der DE 197 20 848 A1 ist ein Rohrdruckmittler für strömende Medien bekannt. Der Rohrdruckmittler besteht aus einem rohrförmigen ein- oder mehrteiligen Druckmittlergehäuse mit endseitigen Flanschanschlüssen und einer innen liegenden Membran, welche einem Membranbett gegenüberliegt.

Aus der DE 10 2005 016 812 B3 ist eine Vorrichtung zur Messung eines Drucks in einem Strömungskanal bekannt. In diesem Fall wird anstelle einer Rohrleitung ein elastisch verformbarer Schlauch als Membran eingesetzt. Um über die Verformung der Membran eine Druckänderung zu messen, ist in diesem Fall ein elektromagnetischer Oszillator mit Oszillatorspule vorgesehen, welcher mithilfe einer Klemme im Bereich eines Schlauchabschnittes gehalten wird. Die elastisch verformbare Membran als Schlauch kann somit nur im Bereich der Klemmposition auf ihren Nenndurchmesser fixiert werden, während links- und rechtsseitig eine Aufweitung der Membran möglich ist.

Aus dem US-Patent 4,534,242 ist ein Rohrdruckmittler bekannt, welcher mit einer gummielastischen Membran versehen ist. Die Membran wird zwischen den Flanschanschlüssen und den Rohrleitungen abdichtend eingeklemmt und besitzt im mittleren Abschnitt eine höhere Wandstärke mit radialen Fortsätzen, die ebenfalls zwischen den Druckmittlergehäuseteilen eingeklemmt werden. Ein erforderlicher Druckraum für das Anzeigeelement befindet sich hinter dem Abschnitt der Membran, der eine annähernd doppelte Wandstärke aufweist.

Aus dem US-Patent 3,163,529 ist ebenfalls ein Rohrdruckmittler bekannt, welcher mit einer elastischen Membran ausgestattet ist, die stirnseitig zwischen den Einzelteilen des Rohrdruckmittlers eingeklemmt ist. Die Membran ist im Wesentlichen zwischen den Druckmittlergehäuseteilen eingeklemmt und verfügt nur über einen kurzen Abschnitt, in dem Membran parallel zum Rohrverlauf ausgerichtet ist. In diesem Bereich befindet sich hinter der Membran der erforderliche Druckraum zur Steuerung des Anzeigeinstrumentes.

Die bekannten Rohrdruckmittler sind mit einem Druckraum ausgestattet, welcher sich nur über einen geringen Bereich in Axialrichtung erstreckt, sodass besondere Maßnahmen zur Durchfahrt eines Reinigungsmolches nicht erforderlich sind. Soweit metallische Membranen eingesetzt werden, reicht die erzielbare Volumenänderung über diesen relativ kurzen Axialabschnitt des Druckraumes nicht aus und erfordert einen grundsätzlich anderen Aufbau, wobei gleichzeitig Probleme bei der Reinigung der Rohrleitung mit einem Molch entstehen, die eine gesonderte Lösung erfordern.

Der vorliegenden Erfindung liegt die Aufgabe zugrunde, einen neuartigen Rohrdruckmittler aufzuzeigen, der die bekannten Probleme aus dem Stand der Technik vermeidet und die problemlose Durchfahrt eines Molches durch den Rohrdruckmittler ermöglicht.

Erfindungsgemäß ist zur Lösung der Aufgabe vorgesehen, dass hinter der Membran Führungselemente über die gesamte Länge des Druckraumes angeordnet sind, welche partiell die Membran in Radialrichtung derart abstützen, dass die Membran über ihren Umfang zumindest abschnittsweise einen gleichen Durchmesser wie der Nenndurchmesser der Rohrleitung im Bereich des Membranbettes oder einer Ausnehmung aufweist. Weitere besondere Ausgestaltungen der Erfindung ergeben sich aus den Unteransprüchen.

Durch die Verwendung von Führungselementen, an die sich beispielsweise die Membran anlegen kann, wird die Membran partiell in der Art abgestützt, dass zumindest abschnittsweise der Nenndurchmesser im Bereich des Membranbettes oder einer Ausnehmung nicht überschritten wird. Somit entsteht eine Gleitführung für einen Molch, die einerseits ein Steckenbleiben und andererseits eine übermäßige Aufweitung der Membran verhindert. Dies hat unter anderem zur Folge, dass die Membran im Bereich der Ausnehmung im Druckmittlergehäuse nicht übermäßig aufgeweitet werden kann und damit eine sichere Führung für den Molch entsteht. Der Molch wird quasi wie auf Gleitschienen durch den Rohrdruckmittler geleitet, sodass insbesondere eine deutliche Verformung der Membran in Fahrtrichtung und ein sich hier ergebender Staudruck verhindert werden kann.

In einer ersten Ausführungsform ist vorgesehen, dass die Führungselemente aus Stäben, vorzugsweise Rundstäben bestehen, welche in tangential angeschnittene offene Bohrungen des Druckmittlergehäuses als Führungsschienen eingeschoben sind, wobei der Innendurchmesser der Stäbe dem Nenndurchmesser entspricht. Durch die Verwendung von Stäben in Axialrichtung des Rohrdruckmittlers kann beispielsweise die Membran partiell stabilisiert werden, sodass der Innendurchmesser im Bereich des Druckmittlergehäuses dem Nenndurchmesser annähernd entspricht. Die Stäbe werden zu diesem Zweck in Bohrungen eingeschoben die tangential in Richtung auf das Zentrum des Druckmittlergehäuses angeschnitten sind. Nach Einschieben der Stäbe ragen diese mit einem Teil ihres Durchmessers in den Innenraum des Druckmittlergehäuses, und zwar insoweit, dass die umfangsverteilten Stäbe in ihrer maximalen Erstreckung einen Durchmesser aufweisen, der dem Nenndurchmesser der Rohrleitungen und des Rohrdruckmittlers entspricht. Gegebenenfalls besteht die Möglichkeit diesen Durchmesser geringfügig größer zu gestalten, um beispielsweise die Materialdicke der Membran und eine notwendige Verformung zu berücksichtigen. Im Wesentlichen wird aber durch die Stäbe erreicht, dass Führungselemente für den Molch vorhanden sind, der zwar immer noch durch die Membran hindurchgleiten muss, jedoch zusätzlich durch die umfangsverteilten Stäbe abgestützt wird, wobei diese Abstützung selbstverständlich auch für die Membran entsteht, um somit eine ungewünschte Deformierung in Fahrtrichtung zu verhindern.

Alternativ ist vorgesehen, dass die Führungselemente aus mehreren axialverlaufenden Stegen des Druckmittlergehäuses bestehen, welche im Bereich des Membranbettes angeordnet sind, wobei der Innendurchmesser der Stege dem Nenndurchmesser entspricht. Durch axial verlaufende Stege im Druckmittlergehäuse werden ebenfalls Führungselemente ausgebildet auf denen die Membran abstützend anliegen kann, wenn beispielsweise ein Molch den Rohrdruckmittler durchfährt. Die hierbei vorgesehenen axialverlaufenden Stege werden ebenso umfangsverteilt im Bereich der Ausnehmung angeordnet und weisen einen Innendurchmesser auf, der dem Nenndurchmesser des Rohrdruckmittlers entspricht. Wie im ersten Ausführungsbeispiel kann dieser Innendurchmesser geringfügig größer ausgebildet sein, um die Materialstärke der Membran zu berücksichtigen und eine notwendige Verformung der Membran zu gewährleisten.

In einer weiteren alternativen Ausführungsform ist vorgesehen, dass die Führungselemente aus mehreren spiralförmigen Stegen des Druckmittlergehäuses bestehen, welche im Bereich des Membranbettes angeordnet sind, wobei der Innendurchmesser der Stege dem Nenndurchmesser entspricht. Anstelle der axial verlaufenden Stege besteht ebenso die Möglichkeit spiralförmige Stege im Bereich der Ausnehmung des Druckmittlergehäuses vorzusehen. Die spiralförmigen Stege bilden ebenfalls Führungselemente, die einerseits zur partiellen Anlage der Membran, aber ebenso zur Gleitführung eines Molches verwendet werden können. Der Innendurchmesser dieser Stege ist ebenfalls wieder dem Nenndurchmesser des Rohrdruckmittlers angepasst oder gegebenenfalls geringfügig größer ausgeführt, um die vorgenannten Vorteile zu erzielen.

Eine Kombination der vorgenannten Ausführungsformen ist ebenfalls denkbar.

In einer weiteren besonderen Ausführungsform ist vorgesehen, dass die Führungselemente aus zumindest einem Einlegeteil bestehen, welches hinter der Membran angeordnet ist. Diese Ausführungsvariante geht davon aus, dass die Führungselemente aus Einlegeteilen bestehen, welche unmittelbar hinter der Membran in der vorhandenen Ausnehmung eingelegt werden können. Die Einlegeteile können hierbei konstruktiv in derart gestaltet sein, dass sie entweder axial oder spiralförmige Stege besitzen, welche eine vergleichbare Funktion übernehmen, wie bei den vorher genannten Ausführungsbeispielen. Zudem können die Einlegeteile unmittelbar mit einem Membranbett ausgestattet sein, sodass eine aufwändige Bearbeitung des Druckmittlergehäuses entfällt. Die hierbei vorzugsweise eingesetzten Einlegeteile können preisgünstig in einem Prägeverfahren oder durch Ausgießen einer hierzu angefertigten Form in großen Stückzahlen preiswert hergestellt werden. Vorzugsweise können mehrere Einlegeteile segmentartig hinter der Membran angeordnet werden, wobei diese sich über annähernd 360° Grad erstrecken und vorzugsweise eine gerade oder ungerade Anzahl von Einlegeteilen vorgesehen ist. Die Anzahl der Einlegeteile hängt im Wesentlichen von dem Nenndurchmesser des Rohrdruckmittlers ab, wobei in Sonderfällen auch einteilige Einlegeteile bei geringen Nennweiten eingesetzt werden können. Auch bei der Verwendung von einteiligen Einlegeteilen ist mit einer deutlichen Kostenreduzierung zu rechnen, da die Einlegeteile in einem separaten Produktionsprozess hergestellt werden und unabhängig davon das Druckmittlergehäuse hergestellt wird, sodass bei eventuellen erforderlichen Nacharbeiten lediglich die Einlegeteile bearbeitet werden müssen. Soweit mehrere Einlegeteile verwendet werden, können diese vorzugsweise identisch ausgebildet sein und aus einem Segment über einen entsprechenden Winkelbereich bestehen, sodass die Gesamtzahl der Einlegeteile zu einer Überdeckung von 360° führt.

Bei der Verwendung von Einlegeteilen können diese auf der Innenseite zusätzlich das Membranbett aufweisen, sodass eine aufwändige Bearbeitung des Druckmittlergehäuses entfällt. Zur Ausbildung der Führungselemente können die Einlegeteile zusätzlich im Kantenbereich eine größere Wandstärke besitzen, sodass der Innendurchmesser der Kanten dem Nenndurchmesser des Rohrdruckmittlers entspricht. Der mögliche Kantenbereich kann sich sowohl in Umfangsrichtung als auch in Axialrichtung erstrecken, sodass beispielsweise bei einer Vielzahl von Einlegeteilen in Axialrichtung mehrere Stege vorhanden sind und eine zusätzliche Nachbearbeitung entfällt. Alternativ besteht selbstverständlich die Möglichkeit die Einlegeteile in Axialrichtung mit Stegen oder spiralförmigen Erhebungen auf der Innenseite zu versehen, welche den gleichen Zweck erfüllen, wie die axial- oder spiralförmig verlaufenden Stege in der Innenwandung des Druckmittlergehäuses. Bei sämtlichen Ausführungsvarianten kann der Innendurchmesser gegebenenfalls geringfügig größer ausgeführt sein, um eine Verformung der Membran zu begünstigen.

In einer weiteren besonderen Ausgestaltung ist vorgesehen, dass die Einlegeteile auf der Außenseite und/oder die Innenwandung des Druckmittlergehäuses mit Radial- und/oder Axialnuten versehen sind. Durch die Ausbildung von Radial- und/oder Axialnuten in der Innenwandung des Druckmittlergehäuses oder auf der Außenseite der Einlegeteile wird ein zusätzlicher Effekt erzielt. Die Radial- und/oder Axialnuten dienen hierbei dazu der Druckmittlerflüssigkeit im Druckraum die Möglichkeit zu schaffen einen Druckausgleich vorzunehmen. Im Falle eines Staudruckes beim Durchfahren eines Molches kann somit ein Druckausgleich durch die Radial- und/oder Axialnuten erfolgen, sodass die befürchtete Verformung der Membran unterbleibt. Das druckübertragende Medium im Druckraum kann jederzeit durch die vorhandenen Radial- und/oder Axialnuten entgegen der Fahrtrichtung des Molches zurückfließen, sodass keine unerwünschte Aufwölbung der Membran in Fahrtrichtung entsteht.

Je nachdem welche Variante bei einem Rohrdruckmittler zum Einsatz kommt, kann das Druckmittlergehäuse einteilig ausgebildet sein, beispielsweise bei der Verwendung von axial- oder spiralförmigen Stegen im Bereich der Ausnehmung oder es kann sich um eine zumindest zweiteilige Ausführungsform des Druckmittlergehäuses handeln, wobei in einem solchen Fall Einlegeteile hinter der Membran angeordnet werden können und nach dem Zusammenfügen der Druckmittlergehäuseteile eine Verschweißung oder Verlötung der Druckmittlergehäuseteile erfolgt.

Zur optimalen Zentrierung des Molches innerhalb des Rohrdruckmittlers wird in weiterer Ausgestaltung der Erfindung vorgeschlagen, dass die Führungselemente vorzugsweise aus einer geraden oder ungeraden Anzahl von Stäben, Stegen oder Randverstärkungen besteht.

In weiterer besonderer Ausgestaltung der Erfindung ist vorgesehen, dass beispielsweise die Einlegeteile aus einem Material mit einem hohen Temperaturkoeffizienten gefertigt werden. Durch den hohen Temperaturkoeffizienten ist somit davon auszugehen, dass die Einlegeteile im Falle der Erwärmung sich wesentlich stärker ausdehnen als das Druckmittlergehäuse, sodass bei einem Reinigungsprozess mit Molch, welcher in der Regel unter erhöhten Temperaturen stattfindet, die Membran und damit der Molch durch die Einlegeteile zentrierend abgestützt wird.

Sämtliche der vorgenannten Ausführungsvarianten erfüllen somit in vorteilhafter Weise ihren Zweck einer ungehinderten Molchdurchfahrt im Falle eines Reinigungsprozesses. Darüber hinaus erfüllen die erfindungsgemäßen Rohrdruckmittler selbstverständlich auch die normale Funktion zur Druckübertragung zu einem Messwerk, um im normalen Prozessgang den Druck überwachen zu können. Der wesentliche Vorteil der Erfindung besteht darin, dass mit Hilfe von Führungselementen verhindert wird, dass ein Molch oder vergleichbare Reinigungsmittel bei der Durchfahrt durch das Rohrleitungssystem im Rohrdruckmittler entweder stecken bleibt oder zu einer Verformung der Membran führt. Durch die vorgeschlagenen Maßnahmen wird dies in infizienter Weise verhindert und damit die Lebensdauer der eingesetzten Rohrdruckmittler wesentlich erhöht.

Die Erfindung wird im Weiteren anhand der Figuren nochmals beschrieben.

Es zeigt
- Fig. 1: in einer geschnittenen Seitenansicht einen erfindungsgemäßen Rohrdruckmittler mit Membran,
- Fig. 2: in einer perspektivischen geschnittenen Ansicht den Rohrdruckmittler gemäß Figur 1 mit einer teilweise entfernten Membran,
- Fig. 3: in einer geschnittenen Seitenansicht den Rohrdruckmittler gemäß Figur 1 und 2 ohne Membran,
- Fig. 4: in einer Seitenansicht und geschnittenen Draufsicht nochmals den Rohrdruckmittler gemäß Figur 1 - 3,
- Fig. 5: in einer perspektivisch geschnittenen Ansicht eine weitere Ausführungsform eines erfindungsgemäßen Rohrdruckmittlers,
- Fig. 6: in einer perspektivisch geschnittenen Ansicht eine abweichende Ausführungsvariante des Rohrdruckmittlers mit vollständiger Darstellung der Führungselemente,
- Fig. 7: in einer perspektivisch geschnittenen Ansicht eine weitere Ausführungsvariante des erfindungsgemäßen Rohrdruckmittlers,
- Fig. 8: in einer perspektivisch geschnittenen Ansicht den aus Figur 7 bekannten Rohrdruckmittler mit vollständig dargestellten Führungselementen,
- Fig. 9: in einer perspektivisch geschnittenen Ansicht eine weitere Ausführungsform eines erfindungsgemäßen Rohrdruckmittlers.

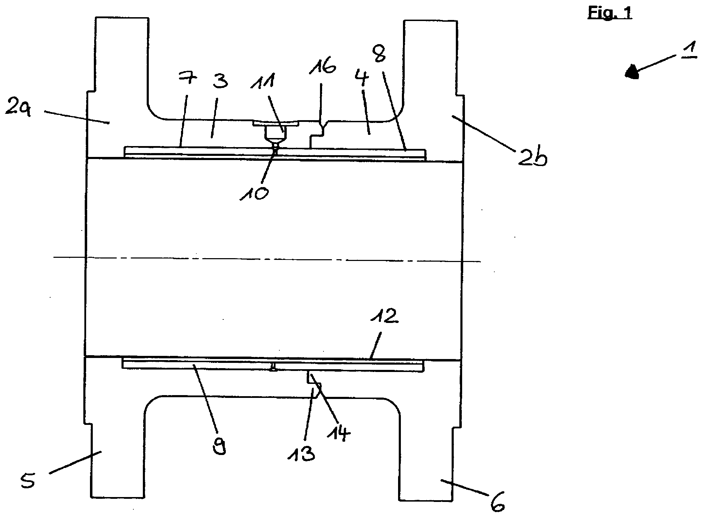

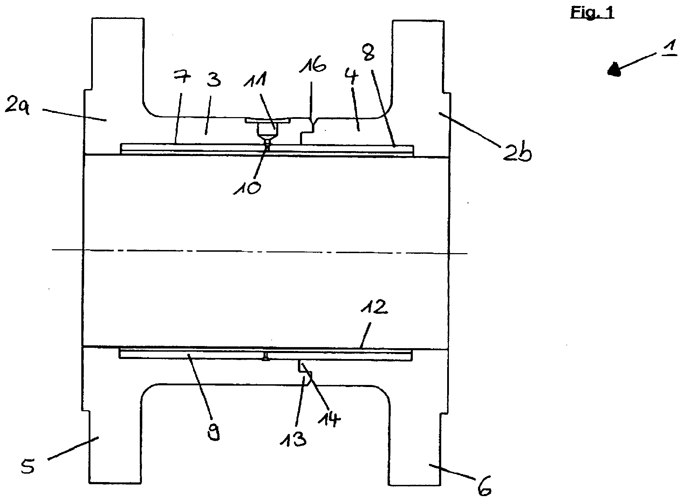

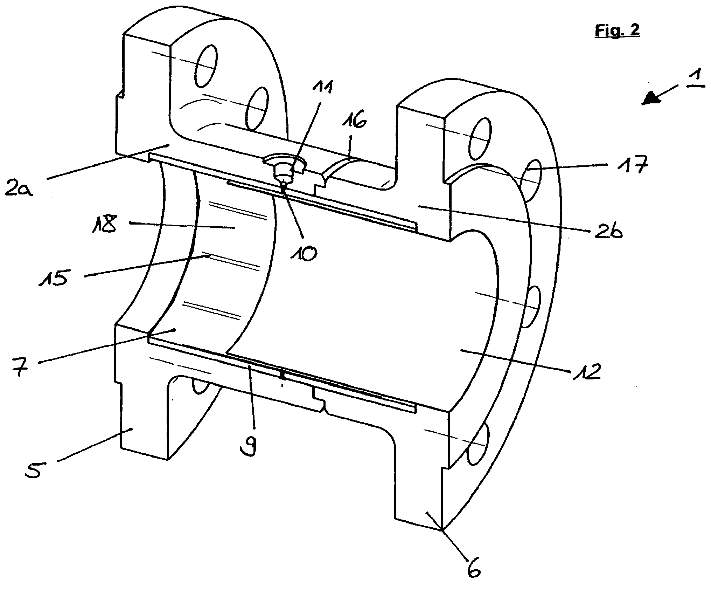

Figur 1 zeigt in einer geschnittenen Seitenansicht einen Rohrdruckmittler 1, welcher im gezeigten Ausführungsbeispiel aus einem zweiteiligen Druckmittlergehäuse 2a, 2b besteht. Die Druckmittlergehäuseteile 2a, 2b bestehen jeweils aus einem rohrförmigen Abschnitt 3, 4 und einem endseitigen Flanschanschluss 5, 6. Die Flanschanschlüsse 5, 6 mit entsprechenden Bohrungen, wie sie beispielsweise aus der Figur 2 ersichtlich sind, ermöglichen eine unmittelbare Verschraubung des Rohrdruckmittlers 1 mit Rohrleitungen. Die hier gezeigte Ausführungsform des Rohrdruckmittlers 1 ist extrem kurzbauend dargestellt, kann im Einzelfall wesentlich länger ausgebildet sein.

In den beiden Druckmittlergehäuseteilen 2a, 2b ist jeweils eine Ausnehmung 7, 8 vorgesehen, die zur Ausbildung des Druckraumes 9 erforderlich sind. Der Druckraum 9 wird durch einen Verbindungkanal 10 mit einer Anschlussverschraubung 11 verbunden, an welche beispielsweise ein nicht dargestelltes Messwerk anschließbar ist. Des Weiteren ist der Druckraum 9 durch eine Membran 12 abdichtend verschlossen, welche beispielsweise während der Fertigung in die Druckmittlergehäuseteile 2a und 2b eingeschoben werden kann und jeweils endseitig in Höhe der Flanschanschlüsse 5, 6 mit den Druckmittlergehäuseteilen 2a, 2b entweder verlötet oder verschweißt wird. Die Membran 12 erstreckt sich somit über die gesamte Länge des Rohrdruckmittlers 1 und dichtet den Druckraum 9 hermetisch ab. Der Druckraum 9 wird in der Regel mit einem Druckübertragungsmedium gefüllt, aber ebenso ist es denkbar, dass nur durch die Luftdruckveränderung im Druckraum 9 das nicht dargestellte Messwerk angesteuert wird. Die beiden Druckmittlergehäuseteile 2a, 2b weisen an ihren den Flanschanschlüssen 5, 6 abgewandten Enden einen stufenförmigen Versatz 13, 14 auf, der zudem zu einer keilförmigen Nut 16 führt. Der stufenförmigen Versatz 13, 14 dient zur besseren Zentrierung der einzelnen Druckmittlergehäuseteile 2a und 2b, während die keilförmige Nut 16 zur Verschweißung der beiden Druckmittlergehäuseteile 2a, 2b vorgesehen ist.

Figur 2 zeigt in einer perspektivischen Ansicht den aus Figur 1 bekannten Rohrdruckmittler 1, wobei die Membran 12 nur teilweise dargestellt ist, um die hinter der Membran 12 liegende Ausnehmung 7 besser erkennen zu können. Die Ausnehmung 7 ist mit Vertiefungen 15 und Erhöhungen 18 ausgestattet, die sich umfangsverteilt um den gesamten Umfang erstrecken. Die Erhöhungen 18 dienen zur Gleitführung eines durchfahrenden Molches, wobei dieser die Membran 12 zumindest partiell gegen die Erhöhung 18 drückt, aber eine weitergehende Verformung der Membran 12 verhindert wird. Die Erhöhungen 18 weisen hierbei einen Innendurchmesser auf, der annähernd dem Nenndurchmesser der Rohrleitung beziehungsweise dem Rohrdruckmittler 1 entspricht. Somit wird die Membran 12 partiell abgestützt und kann sich nicht durch einen entstehenden Staudruck übermäßig verformen. Gleichzeitig wird durch die Erhöhungen 18 sichergestellt, dass durch die Vertiefungen 15 ein Druckausgleich des druckübertragenden Mediums stattfinden kann. Anstelle der Erhöhung 18, welche sich in Axialrichtung erstrecken, können ebenso spiralförmige Stege oder Kombinationen eingesetzt werden. Im gezeigten Ausführungsbeispiel sind die Erhöhungen 18 unmittelbar in der Ausnehmung 7 radial ausgerichtet, sodass sich die Membran 12 zumindest partiell abstützen kann. Aus dieser Ansicht wird ebenso deutlich, dass die Flanschanschlüsse 5, 6 mit über den Umfang verteilt angeordneten Bohrungen 17 ausgestattet sind, sodass eine Verschraubung mit den Rohrleitungen möglich ist.

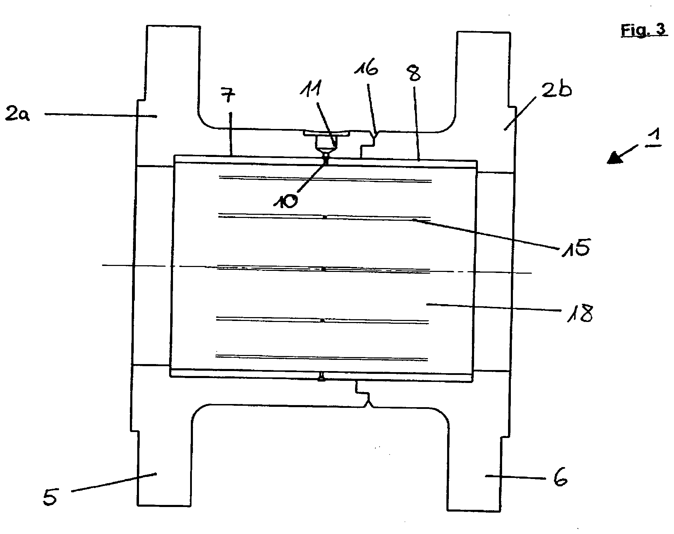

Figur 3 zeigt in einer geschnittenen Seitenansicht den erfindungsgemäßen Rohrdruckmittler 1 gemäß Figur 1 und 2 ohne Membran. Aus dieser Ansicht ist ersichtlich, dass sich die Vertiefung 15 und Erhöhungen 18 über den größten Bereich der Ausnehmungen 7, 8 der beiden Druckmittlergehäuseteilen 2a, 2b erstrecken. Zwischen den Erhöhungen 18 kann zusätzlich ein Membranbett ausgebildet sein, im vorliegenden Ausführungsbeispiel handelt es sich um eine glatte Wandung, die bei besonderen Fällen zusätzliche Oberflächenstrukturierungen aufweisen kann.

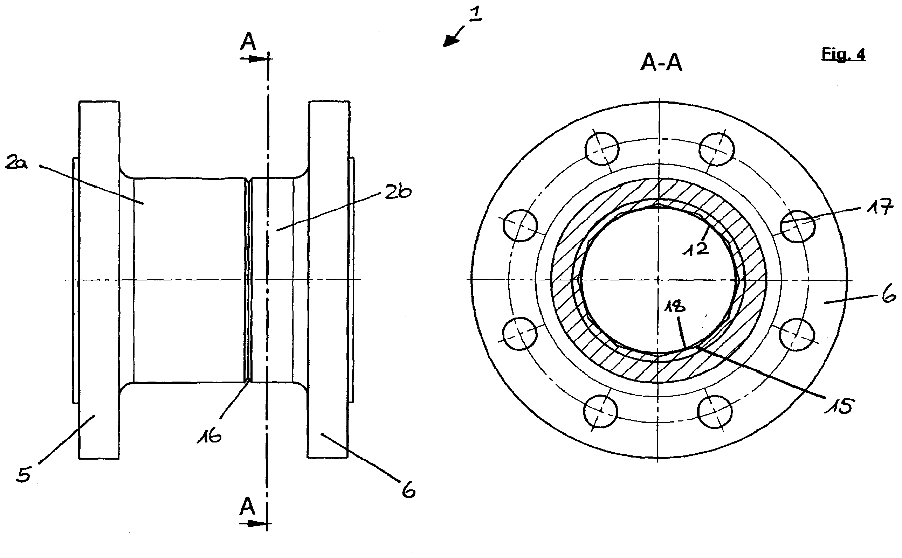

Figur 4 zeigt in einer Seitenansicht und geschnittenen Draufsicht entlang der Schnittlinie A-A den aus den vorgenannten Figuren bekannten Rohrdruckmittler 1, welcher aus den Druckmittlergehäuseteilen 2a, 2b, der Membran 12 und den Flanschanschlüssen 5, 6 besteht.

Aus der geschnittenen Ansicht wird deutlich, wie die Membran 12 innerhalb der Druckmittlergehäuseteile 2a, 2b einliegt und zumindest partiell durch die Erhöhungen 18 abgestützt wird.

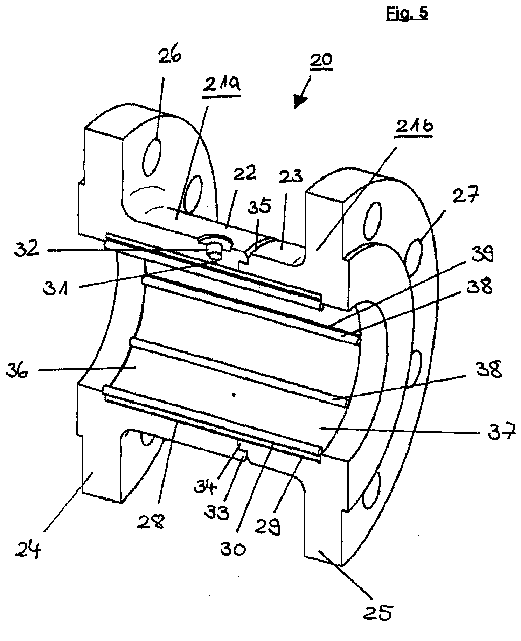

Figur 5 zeigt in einer perspektivischen geschnittenen Ansicht ein weiteres Ausführungsbeispiel eines Rohrdruckmittlers 20. Der Rohrdruckmittler 20 besteht ebenfalls aus einem zweiteiligen Druckmittlergehäuse 21a, 21b. Die Druckmittlergehäuseteile 21a, 21b bestehen jeweils aus einem rohrförmigen Abschnitt 22, 23 und einem endseitigen Flanschanschluss 24, 25. Die Flanschanschlüsse 24, 25 mit entsprechenden Bohrungen 26, 27 ermöglichen eine unmittelbare Verschraubung des Rohrdruckmittlers 20 mit Rohrleitungen. Die hier gezeigte Ausführungsform des Rohrdruckmittlers 20 ist extrem kurzbauend dargestellt, kann im Einzelfall jedoch wesentlich länger ausgebildet sein.

In den beiden Druckmittlergehäuseteilen 21a, 21b ist jeweils eine Ausnehmung 28, 29 vorgesehen, die zur Ausbildung eines Druckraumes 30 erforderlich sind. Der Druckraum 30 wird durch einen Verbindungskanal 31 mit einer Anschlussverschraubung 32 verbunden, an welchen beispielsweise ein nicht dargestelltes Messwerk anschließbar ist. Ferner ist der Druckraum 30 durch eine Membran abdichtend verschlossen. Die Membran ist in dieser Darstellung nicht dargestellt, und wird beispielsweise bei der Fertigung in die Druckmittlergehäuseteile 21a, 21b eingeschoben und jeweils endseitig in Höhe der Flanschanschlüsse 24, 25 mit den Druckmittlergehäuseteile 21a, 21b entweder verlötet oder verschweißt. Die Membran erstreckt sich somit über die gesamte Länge des Rohrdruckmittlers 20 und dichtet den Druckraum 30 hermetisch ab. Der Druckraum 30 wird in der Regel mit einem Druckübertragungsmedium gefüllt, aber ebenso ist es denkbar, dass nur durch die Luftdruckveränderung im Druckraum 30 das nicht dargestellte Messwerk angesteuert wird. Die beiden Druckmittlergehäuseteile 21a, 21b weisen an ihren den Flanschanschlüssen 24, 25 abgewandten Enden einen stufenförmigen Versatz 33, 34 auf, der zudem zu einer keilförmigen Nut 35 führt. Der stufenförmige Versatz 33, 34 dient zur besseren Zentrierung der einzelnen Druckmittlergehäuseteile 21a, 21b, während die keilförmige Nut 35 zur Verschweißung oder Verlötung der beiden Druckmittlergehäuseteile 21a, 21b vorgesehen ist. Die Innenwandung 36, 37 der beiden Druckmittlergehäuseteile 21a, 21b ist in diesem Ausführungsbeispiel mit umfangsverteilten Rundstäben 38 ausgestattet. Die Rundstäbe 38 können beispielsweise in eine vorhandene Bohrung 39 eingeschoben werden. Die Bohrungen 39 werden in die Druckmittlergehäuseteile 21a, 21b zuvor eingebracht bevor die Ausdrehung der Innenwandung 36, 37 erfolgt. Die Bohrungen 39 werden hierbei in der Art angeordnet, dass nach erfolgter Ausdrehung die Bohrungen 39 zum Mittelpunkt der Druckmittlergehäuseteile 21a, 21b hin geöffnet sind und nach Einschieben der Rundstäbe 38 diese in den Druckraum 30 zumindest teilweise hineinragen. Die nicht dargestellte Membran liegt somit in Axialrichtung linienförmig an den Rundstäben 38 an, sodass unabhängig der vorherrschenden Druckverhältnisse ein Molch durch die Membran hindurch unter Zuhilfenahme einer Gleitführung durch die Rundstäbe 38 hindurchgleiten kann. Die Membran wird hierbei zusätzlich durch die Rundstäbe 38 insoweit umfangsverteilt abgestützt, dass eine übermäßige Deformierung durch den Molch ausgeschlossen werden kann.

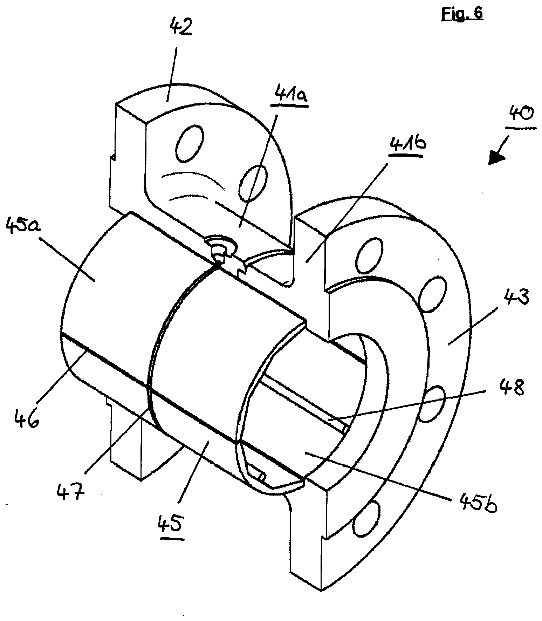

Figur 6 zeigt in einer perspektivischen geschnittenen Ansicht eine weitere Ausführung eines Druckmittlers 40 der annähernd identisch zu den bisherigen Druckmittlern 1 und 20 aufgebaut ist. Auch dieser Druckmittler 40 besteht aus zwei Druckmittlergehäuseteilen 41a und 41b, die über Flanschanschlüsse 42, 43 mit Rohrleitungen verschraubt werden können. Die beiden Druckmittlergehäuseteile 21a, 21b sind nahezu identisch zu den vorhergehenden Ausführungsbeispielen aufgebaut, mit einer Ausnahme. Die notwendigen Führungselemente in Form von Stäben befinden sich bei dieser Ausführungsform nicht unmittelbar in der Innenwandung, sondern es liegen Einlegeteile 45 identischer Abmessungen zu mehreren in der Bohrung der beiden Gehäuseteile 41a, 41b ein. Die Einlegeteile 45 sind im gezeigten Ausführungsbeispiel halbkreisförmig dargestellt, sodass insgesamt ein Einlegeteil 45a und ein Einlegeteil 45b vorliegt. Selbstverständlich besteht auch die Möglichkeit die Anzahl der Einlegeteile 45 zu erhöhen. Die Einlegeteile 45a, 45b weisen auf ihrer rückwärtigen Seite eine Axialnut 46 und eine Umfangsnut 47 auf. Die Radial- und Umfangsnut 46, 47 dient vorrangig dazu einen schnellen Druckausgleich in dem Druckraum zu ermöglichen, wobei der Druckraum wiederum durch eine nicht dargestellte Membran gegenüber den beiden Druckmittlergehäuseteile 41a, 41b luftdicht abgeschlossen ist. Die Membran liegt zu diesem Zweck innen an den Einlegeteilen 45 an, und zwar zumindest teilweise an den hier abgebildeten stabförmigen Erhebungen 48, die unmittelbar einstückig mit den Einlegeteilen 45 verbunden sind. Die Einlegeteile 45 können hierbei beispielsweise durch ein Gießverfahren relativ einfach hergestellt werden und nach weiterer Bearbeitung erfolgt die Einlegung in die beiden Druckmittlergehäuseteile 41a, 41b, bevor diese untereinander und mit der Membran verbunden werden, beispielsweise verschweißt oder verlötet. Durch die angeformten Erhebungen 48 wird wiederum die Membran umfangsverteilt teilweise abgestützt, sodass ein Molch ohne eine Deformierung der Membran zu verursachen durch den Druckmittler 40 hindurchfahren kann.

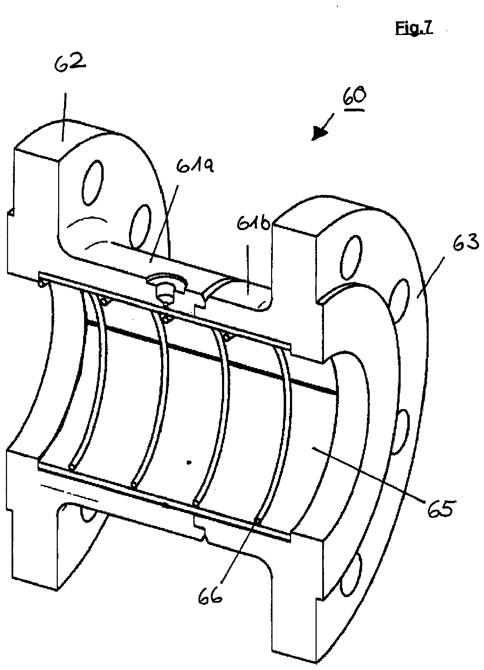

Figur 7 zeigt eine weitere Ausführungsform eines erfindungsgemäßen Rohrdruckmittlers 60 in einer perspektivischen geschnittenen Ansicht. Ebenso wie in den vorhergehenden Ausführungsbeispielen besteht der Rohrdruckmittler 60 aus zwei Druckmittlergehäuseteilen 61a, 61b. Beide Druckmittlergehäuseteile 61a, 61b verfügen über Flanschanschlüsse 62, 63 und sind ansonsten ähnlich aufgebaut wie die vorhergehenden Ausführungsbeispiele. Abweichend zu den vorhergehenden Ausführungsbeispielen befinden sich in der Bohrung der beiden Druckmittlergehäuseteilen 61a, 61b Einlegteile 65, die mit einstückig angeformten runden Erhebungen 66 ausgestattet sind. Die Erhebungen 66 sind hierbei gegenüber den vorhergehenden Ausführungsbeispielen nicht in Axialsondern Umfangsrichtung ausgebildet. Die Einlegteile 65 können ebenso wieder in einem einfachen Gießverfahren hergestellt werden und demzufolge nach Endbearbeitung in die Bohrung der beiden Druckmittlergehäuseteilen 61a, 61b zusammen mit der Membran eingelegt werden, sodass im Anschluss daran die Membran mit den beiden Druckmittlergehäuseteilen 61a, 61b und die Druckmittlergehäuse untereinander verbunden werden können, vorzugsweise durch eine Verschweißung oder eine Verlötung.

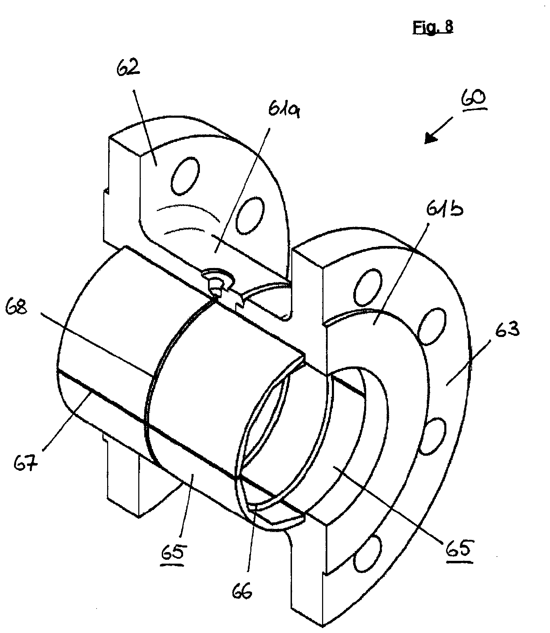

Figur 8 zeigt in einer perspektivischen geschnittenen Ansicht den aus Figur 7 bekannten Rohrdruckmittler 60 und die hierfür vorgesehenen Einlegeteile 65, wobei in diesem Fall zwei Einlegeteile 65 verwendet werden die sich jeweils über einen Winkel von 180 Grad erstrecken. Die Einlegteile 65 sind ebenso im rückwärtigen Bereich mit einer Axialnut 67 und einer Umfangsnut 68 ausgestattet, während auf der Innenfläche die Erhebungen 66 ausgebildet sind.

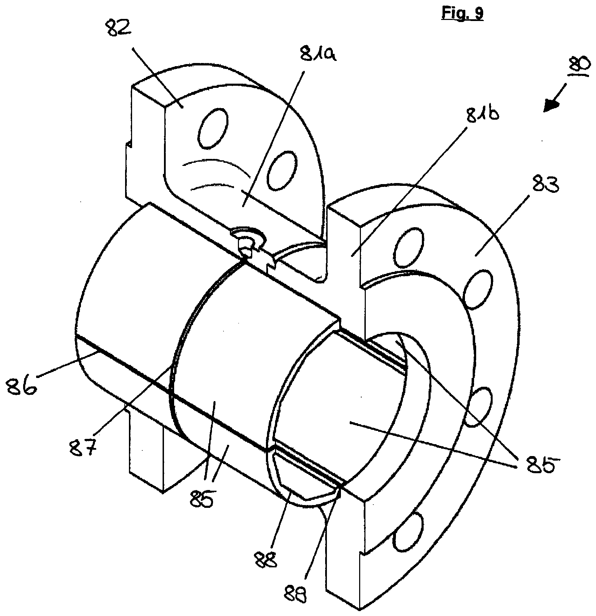

Figur 9 zeigt in einer weiteren perspektivischen geschnittenen Ansicht einen Rohrdruckmittler 80, der wiederum aus zwei Druckmittlergehäuseteilen 81a und 81b besteht, die mit Flanschanschlüssen 82, 83 ausgestattet sind. Dieser Rohrdruckmittler 80 ist ebenfalls mit Einlegeteilen 85 ausgestattet, wobei es sich um vier Einlegeteile über den gesamten Umfang der Innenwandung der beiden Druckmittlergehäuseteile 81a, 81b handelt. Die Einlegeteile 85 bestehen somit aus Viertelsegmenten, die wiederum durch ein einfaches Gieß- oder Prägeverfahren hergestellt werden können. Die Einlegeteile 85 besitzen auf dem Außenumfang eine Axialnut 86 und eine Umfangsnut 87, die dem erforderlichen Druckausgleich innerhalb des Druckraumes dient. Die Innenfläche jedes einzelnen Einlegeteils 85 ist demgegenüber mit abgeschrägten Teilflächen 88 ausgestattet, die zum Axialrand 89 der Einlegeteile 85 hin mit einer Erhebung 90 in den Innenraum des Rohrdruckmittlers 80 insoweit hineinragen, dass eine Abstützung der nicht dargestellten Membran in Axialrichtung erfolgen kann. Somit wird die Membran wiederum unterstützt und ein Molch kann ohne Deformierung der Membran durch den Rohrdruckmittler 80 hindurch gleiten. Selbstverständlich ist die Gestaltung der inneren Struktur der Einlegeteile 85 variabel, es muss lediglich sichergestellt werden, dass einzelne Erhebungen auf der Innenseite zu einer Abstützung der Membran beitragen. Die Erhebungen können hierbei sowohl in Axialrichtung und/oder in Umfangsrichtung der Innenfläche angeordnet sein. Durch die tieferliegenden Bereiche der Einlegeteile 85 wird hierbei zwischen den Einlegeteilen 85 und der Membran ein Druckraum ausgebildet, der zur Übertragung des zu messenden Wertes verwendet werden kann. Zu diesem Zweck kann der Druckraum mit einer Flüssigkeit gefüllt sein, die wiederum den Druck auf ein anschließbares Messwerk überträgt. Der besondere Vorteil dieser Ausgestaltung besteht darin, dass aufgrund der großzügig demonisierten Fläche die Übertragungsflüssigkeit nicht aufgestaut wird und durch die vorhandenen Axialnuten 86 und Umfangsnuten 87 zusätzlich ein Druckausgleich bewirkt wird.

### Bezugszeichenliste

- 1: Rohrdruckmittler
- 2a: Druckmittlergehäuseteil
- 2b: Druckmittlergehäuseteil
- 3: Abschnitt
- 4: Abschnitt
- 5: Flanschanschluss
- 6: Flanschanschluss
- 7: Ausnehmung
- 8: Ausnehmung
- 9: Druckraum
- 10: Verbindungskanal
- 11: Anschlussverschraubung
- 12: Membran
- 13: Versatz
- 14: Versatz
- 15: Vertiefung
- 16: Nut
- 17: Bohrung
- 18: Erhebung
- 20: Rohrdruckmittler
- 21a: Druckmittlergehäuseteil
- 21b: Druckmittlergehäuseteil
- 22: Abschnitt
- 23: Abschnitt
- 24: Flanschanschluss
- 25: Flanschanschluss
- 26: Bohrung
- 27: Bohrung
- 28: Ausnehmung
- 29: Ausnehmung
- 30: Druckraum
- 31: Verbindungsdeckel
- 32: Anschlussverschraubung
- 33: Versatz
- 34: Versatz
- 35: Nut
- 36: Innenwandung
- 37: Innenwandung
- 38: Rundstäbe
- 39: Bohrung
- 40: Druckschriften
- 41a: Druckmittlergehäuseteil
- 41b: Druckmittlergehäuseteil
- 42: Flanschanschluss
- 43: Flanschanschluss
- 45: Einlegeteil
- 45a: Einlegeteil
- 45b: Einlegeteil
- 46: Axialnut
- 47: Umfangsnut
- 48: Erhebung
- 60: Rohrdruckmittler
- 61a: Druckmittlergehäuseteil
- 61b: Druckmittlergehäuseteil
- 62: Flanschanschluss
- 63: Flanschanschluss
- 65: Einlegeteil
- 66: Erhebung
- 67: Axialnut
- 68: Umfangsnut
- 80: Rohrdruckmittler
- 81a: Druckmittlergehäuseteil
- 81b: Druckmittlergehäuseteil
- 82: Flanschanschluss
- 83: Flanschanschluss
- 85: Einlegeteil
- 86: Axialnut
- 87: Umfangsnut
- 88: Teilfläche
- 90: Erhebung

## Patentansprüche

1. Rohrdruckmittler (1, 20, 60, 80), welcher zum Einbau in eine Rohrleitung verwendet werden kann, bestehend aus einem rohrförmigen ein- oder mehrteiligen Druckmittlergehäuseteil (2a, 2b, 21a, 21b, 41a, 41b, 61a, 61b, 81a, 81b) mit endseitigen Flanschanschlüssen (5, 6, 24, 25, 42, 43, 62, 63, 82, 83) und einer innenliegenden Membran (12), welche einem Membranbett gegenüberliegt und einen Druckraum einschließt,
**dadurch gekennzeichnet,**
**dass** hinter der Membran (12) Führungselemente über die gesamte Länge des Druckraumes angeordnet sind, welche partiell die Membran (12) in Radialrichtung derart abstützen, dass die Membran (12) über ihren Umfang zumindest abschnittsweise einen gleichen Durchmesser wie der Nenndurchmesser der Rohrleitung im Bereich des Membranbettes oder einer Ausnehmung (7, 8) aufweist.

2. Rohrdruckmittler (1, 20, 60, 80) nach Anspruch 1,
**dadurch gekennzeichnet,**
**dass** die Führungselemente aus Rundstäben (38) bestehen, welche in tangential angeschnittene offene Bohrungen des Druckmittlergehäuseteils (2a, 2b, 21a, 21b, 41a, 41b, 61a, 61b, 81a, 81b) als Führungsschienen eingeschoben sind, wobei der radiale Abstand der Stäbe einen Innedurchmesser der Stäbe definiert der dem Nenndurchmesser der Rohrleitung entspricht.

3. Rohrdruckmittler (1, 20, 60, 80) nach Anspruch 1 oder 2,
**dadurch gekennzeichnet,**
**dass** die Führungselemente aus mehreren axialverlaufenden Vertiefungen (15) und Erhebungen (18) des Druckmittlergehäuseteils (2a, 2b, 21a, 21b, 41a, 41b, 61a, 61b, 81a, 81b) bestehen, welche im Bereich des Membranbettes angeordnet sind, wobei der radiale Abstand der Erhebungen einen Innendurchmesser der Erhebungen definiert, der (18) dem Nenndurchmesser der Rohrleitung entspricht.

4. Rohrdruckmittler (1, 20, 60, 80) nach einem der Ansprüche 1, 2 oder 3,
**dadurch gekennzeichnet,**
**dass** die Führungselemente aus mehreren spiralförmigen Stegen des Druckmittlergehäuseteils (2a, 2b, 21a, 21b, 41a, 41b, 61a, 61b, 81a, 81b) bestehen, welche im Bereich des Membranbettes angeordnet sind, wobei der radiale Abstand der Stege einen Innedurchmesser der Stege definiert, der dem Nenndurchmesser der Rohrleitung entspricht.

5. Rohrdruckmittler (1, 20, 60, 80) nach einem der Ansprüche 1 bis 4,
**dadurch gekennzeichnet,**
**dass** die Führungselemente aus zumindest einem Einlegeteil (45, 65, 85) bestehen, welches hinter der Membran (12) angeordnet ist.

6. Rohrdruckmittler (1, 20, 60, 80) nach einem der Ansprüche 1 bis 5,
**dadurch gekennzeichnet,**
**dass** mehrere Einlegeteile (45, 65, 85) segmentartig hinter der Membran (12) angeordnet sind, wobei diese über annähernd 360° Grad verteilt sind und vorzugsweise eine gerade oder ungerade Anzahl von Einlegeteilen (45, 65, 85) vorgesehen ist.

7. Rohrdruckmittler (1, 20, 60, 80) nach einem der Ansprüche 1 bis 6,
**dadurch gekennzeichnet,**
**dass** die Einlegeteile (45, 65, 85) auf der Innenseite das Membranbett aufweisen, jedoch im Kantenbereich eine größere Wandstärke besitzen, wobei der radiale Abstand der Kanten einen Innendurchmesser der Kanten definiert, der dem Nenndurchmesser des Rohrdruckmittlers (1) entspricht.

8. Rohrdruckmittler (1, 20, 60, 80) nach einem der Ansprüche 1 bis 7,
**dadurch gekennzeichnet,**
**dass** die Einlegeteile (45, 65, 85) in Axialrichtung Stege oder spiralförmige Erhebungen (66) auf der Innenseite aufweisen.

9. Rohrdruckmittler (1, 20, 60, 80) nach einem der Ansprüche 1 bis 8,
**dadurch gekennzeichnet,**
**dass** die Einlegeteile (45, 65, 85) auf der Außenseite mit Axialnuten (46, 67, 86) und/oder Umfangsnuten (47, 68, 87) versehen sind, und/oder die Innenwandung des Druckmittlergehäuses (2a, 2b, 21a, 21b, 41a, 41b, 61a, 61b, 81a, 81b) mit Axialnuten und/oder Umfangsnuten versehen sind.

10. Rohrdruckmittler (1, 20, 60, 80) nach einem der Ansprüche 1 bis 9,
**dadurch gekennzeichnet,**
**dass** das Druckmittlergehäuseteil (2a, 2b, 21a, 21b, 41a, 41b, 61a, 61b, 81a, 81b) zumindest zweiteilig ausgebildet ist, um die vorgesehenen Einlegeteile (45, 65, 85) hinter der Membran (12) anzuordnen, und nach der Montage der Druckmittlergehäuseteile (2a, 2b, 21a, 21b, 41a, 41b, 61a, 61b, 81a, 81b) verschweißt oder verlötet ist.

11. Rohrdruckmittler (1, 20, 60, 80) nach einem der Ansprüche 1 bis 10,
**dadurch gekennzeichnet,**
**dass** die Führungselemente aus einer geraden oder ungeraden Anzahl von Stäben, Erhebungen (18) oder Randverstärkungen bestehen, wobei diese einstückig mit der Wandung der beiden Druckmittlergehäuseteile (2a, 2b, 21a, 21b, 41a, 41b, 61a, 61b, 81a, 81b) ausgebildet sind, oder sich zumindest auf der Innenfläche der Einlegeteile (45, 65, 85) befinden.

12. Rohrdruckmittler (1, 20, 60, 80) nach einem der Ansprüche 1 bis 11,
**dadurch gekennzeichnet,**
**dass** die Einlegeteile (45, 65, 85) aus einem Material mit einem Temperaturkoeffizienten gefertigt sind, welcher höher ist als der des Druckmittlergehäuses, sodass durch die Materialausdehnung eine Zentrierung und Abstützung der Membran (12) erfolgt.

## Claims

1. Inline diaphragm seal (1, 20, 60, 80) that may be used to be installed into a pipeline, consisting of a tubular one- or single-piece diaphragm seal housing part (2a, 2b, 21a, 21b, 41a, 41b, 61a, 61b, 81a, 81b) with flange connections (5, 6, 24, 25, 42, 43, 62, 63, 82, 83) at the end sides and an internal diaphragm (12) located opposite a diaphragm bed and including a pressure space,
**characterized in that**
guide elements are arranged behind the diaphragm (12) over the complete length of the pressure space and partially support the diaphragm (12) in the radial direction such that the diaphragm (12) comprises at least in sections across its circumference a diameter identical to the nominal diameter of the pipeline in the region of the diaphragm bed, or a recess (7, 8).

2. Inline diaphragm seal (1, 20, 60, 80) according to claim 1,
**characterized in that**
the guide elements consist of round bars (38) which are inserted as guide rails into tangentially cut open bores of the diaphragm seal housing part (2a, 2b, 21a, 21b, 41a, 41b, 61a, 61b, 81a, 81b), the radial distance of the bars defining an inner diameter of the bars corresponding to the nominal diameter of the pipeline.

3. Inline diaphragm seal (1, 20, 60, 80) according to claim 1 or 2,
**characterized in that**
the guide elements consist of a plurality of indentations (15) and elevations (18) of the diaphragm seal housing part (2a, 2b, 21a, 21b, 41a, 41b, 61a, 61b, 81a, 81b) extending axially and being arranged in the region of the diaphragm bed, the radial distance of the elevations defining an inner diameter of the elevations corresponding to the nominal diameter of the pipeline.

4. Inline diaphragm seal (1, 20, 60, 80) according to one of claims 1, 2 or 3,
**characterized in that**
the guide elements consist of a plurality of spiralled webs of the diaphragm seal housing part (2a, 2b, 21a, 21b, 41a, 41b, 61a, 61b, 81a, 81b) arranged in the region of the diaphragm bed, the radial distance of the webs defining an inner diameter of the webs corresponding to the nominal diameter of the pipeline.

5. Inline diaphragm seal (1, 20, 60, 80) according to one of claims 1 to 4,
**characterized in that**
the guide elements consist of at least one insert part (45, 65, 85) arranged behind the diaphragm (12).

6. Inline diaphragm seal (1, 20, 60, 80) according to one of claims 1 to 5,
**characterized in that**
a plurality of insert parts (45, 65, 85) is arranged like segments behind the diaphragm (12), these being distributed over approx. 360°, and preferably an even or uneven number of insert parts (45, 65, 85) being provided.

7. Inline diaphragm seal (1, 20, 60, 80) according to one of claims 1 to 6,
**characterized in that**
the insert parts (45, 65, 85) comprise the diaphragm bed on the inner side but have a larger wall thickness in the edge region, the radial distance of the edges defining an inner diameter of the edges corresponding to the nominal diameter of the inline diaphragm seal (1).

8. Inline diaphragm seal (1, 20, 60, 80) according to one of claims 1 to 7,
**characterized in that**
the insert parts (45, 65, 85) comprise, in the axial direction, webs or spiralled elevations (66) on the inner side.

9. Inline diaphragm seal (1, 20, 60, 80) according to one of claims 1 to 8,
**characterized in that**
the insert parts (45, 65, 85) are provided with axial grooves (46, 67, 86) and/or circumferential grooves (47, 68, 87) on the outer side, and/or the inner walls of the diaphragm seal housing (2a, 2b, 21a, 21b, 41a, 41b, 61a, 61b, 81a, 81b) are provided with axial grooves and/or circumferential grooves.

10. Inline diaphragm seal (1, 20, 60, 80) according to one of claims 1 to 9,
**characterized in that**
the diaphragm seal housing part (2a, 2b, 21a, 21b, 41a, 41b, 61a, 61b, 81a, 81b) is embodied at least in two parts to arrange the provided insert parts (45, 65, 85) behind the diaphragm (12) and is welded or soldered after the assembly of the diaphragm seal housing parts (2a, 2b, 21a, 21b, 41a, 41b, 61a, 61b, 81a, 81b).

11. Inline diaphragm seal (1, 20, 60, 80) according to one of claims 1 to 10,
**characterized in that**
the guide elements consist of an even or uneven number of bars, elevations (18) or edge reinforcements, wherein these are integrally formed with the walls of the two diaphragm seal housing parts (2a, 2b, 21a, 21b, 41a, 41b, 61a, 61b, 81a, 81b), or are at least located on the inner surface of the insert parts (45, 65, 85).

12. Inline diaphragm seal (1, 20, 60, 80) according to one of claims 1 to 11,
**characterized in that**
the insert parts (45, 65, 85) are made of a material having a temperature coefficient that is higher than that of the diaphragm seal housing, so that by material expansion, a centring and support of the diaphragm (12) is effected.

## Revendications

1. Séparateur tubulaire (1, 20, 64, 80) lequel peut être utilisé pour le montage dans une conduite, consistant en une partie de boîtier de séparateur (2a, 2b, 21a, 21b, 41a, 41b, 61a, 61115, 81a, 81b), d'une seule pièce ou à plusieurs pièces, de forme tubulaire, avec des raccords à bride (5, 6, 24, 26, 42, 43, 62, 63, 82, 83) côté terminal et une membrane intérieure (12) laquelle est située à l'opposé d'un lit de membrane et inclut un espace de pression,
**caractérisé en ce**
**que** derrière la membrane (12) sont disposés des éléments de guidage sur toute la longueur de l'espace de pression, lequels soutiennent la membrane (12) partiellement en direction radiale de manière à ce que la membrane (12) présente sur sa circonférence, au moins par sections, un diamètre identique au diamètre nominal de la conduite au niveau du lit de membrane ou d'un évidement (7, 8).

2. Séparateur tubulaire (1, 20, 60, 80) selon la revendication 1,
**caractérisé en ce**
**que** les éléments de guidage sont constitués de tiges rondes (38), lesquelles sont insérées en tant que rails de guidage dans des alésages ouverts, coupés tangentiellement, de la partie de boîtier de séparateur (2a, 2b, 21 a, 21 b, 41 a, 41 b, 61 a, 61 b, 81 a, 81 b), l'écart radial des tiges définissant un diamètre intérieur des tiges qui correspond au diamètre nominal de la conduite.

3. Séparateur tubulaire (1, 20, 60, 80) selon la revendication 1 ou 2,
**caractérisé en ce**
**que** les éléments de guidage sont constitués de plusieurs creux (15) et bosses (18), s'étendant axialement, de la partie de boitier de séparateur (2a, 2b, 21 a, 21 b, 41 a, 41 b, 61 a, 61 b, 81 a, 81 b), lesquels sont disposés au niveau de la zone du lit de membrane, l'écart radial des bosses définissant un diamètre intérieur qui correspond au diamètre nominal de la conduite.

4. Séparateur tubulaire (1, 20, 60, 80) selon l'une quelconque des revendications 1, 2 ou 3,
**caractérisé en ce**
**que** les éléments de guidage sont constitués de plusieurs nervures, en forme de spirale, de la partie de boîtier de séparateur (2a, 2b, 21 a, 21 b, 41 a, 41 b, 61 a, 61 b, 81 a, 81 b), lesquelles sont disposées au niveau du lit de membrane, l'écart radial des nervures définissant un diamètre intérieur qui correspond au diamètre nominal de la conduite.

5. Séparateur tubulaire (1, 20, 60, 80) selon l'une quelconque des revendications 1 à 4,
**caractérisé en ce**
**que** les éléments de guidage sont constitués d'au moins une pièce d'insertion (45, 65, 85) qui est disposée derrière la membrane (12).

6. Séparateur tubulaire (1, 20, 60, 80) selon l'une quelconque des revendications 1 à 5,
**caractérisé en ce**
**que** plusieurs pièces d'insertion (45, 65, 85) sont disposées sous forme de segments derrière la membrane (12), celles-ci étant réparties sur approximativement 360° degrés, et de préférence un nombre pair ou impair de pièces d'insertion (45, 65, 85) étant prévu.

7. Séparateur tubulaire (1, 20, 60, 80) selon l'une quelconque des revendications 1 à 6,
**caractérisé en ce**
**que** les pièces d'insertion (45, 65, 85) présentent le lit de membrane sur le côté intérieur, mais possèdent cependant une épaisseur de paroi plus grande dans la zone d'arête, l'écart radial des arêtes définissant un diamètre intérieur des arêtes qui correspond au diamètre nominal du tube séparateur (1).

8. Séparateur tubulaire (1, 20, 60, 80) selon l'une quelconque des revendications 1 à 7,
**caractérisé en ce**
**que** les pièces d'insertion (45, 65, 85) présentent sur le côté intérieur en direction axiale des nervures ou des bosses (56) en forme de spirale.

9. Séparateur tubulaire (1, 20, 60, 80) selon l'une quelconque des revendications 1 à 8,
**caractérisé en ce**
**que** les pièces d'insertion (45, 65, 85) sont munies sur le côté extérieur de rainures axiales (46, 67, 86) et/ou de rainures circonférentielles (47, 68, 87), et/ou **en ce que** la paroi intérieure du boîtier de séparateur (2a, 2b, 21a, 21 b, 41 a, 41 b, 61 a,'61 b, 81 a, 81 b) est munie de rainures axiales et/ou de rainures circonférentielles.

10. Séparateur tubulaire (1, 20, 60, 80) selon l'une quelconque des revendications 1 à 9,
**caractérisé en ce**
**que** la partie de boîtier de séparateur (2a, 2b, 21 a, 21 b, 41 a, 41 b, 61 a, 61 b, 81 a, 81 b) est réalisée au moins en deux pièces afin de disposer les pièces d'insertion prévuées (45, 65, 85) derrière la membrane (12), et est soudée ou brasée après le montage des parties de boîtier de séparateur (2a, 2b, 21 a, 21 b, 41 a, 41 b, 61 a, 61 b, 81 a, 81 b).

11. Séparateur tubulaire (1, 20, 60, 80) selon l'une quelconque des revendications 1 à 10,
**caractérisé en ce**
**que** les éléments de guidage sont constitués d'un nombre pair ou impair de tiges, de bosses (18) ou de renforcements de bord, ceux-ci étant réalisés d'un seul tenant avec la paroi des deux parties de boîtier de séparateur (2a, 2b, 21 a, 21 b, 41 a, 41 b, 61 a, 61 b, 81 a, 81 b) ou se situant au moins sur la surface intérieure des pièces d'insertion (45, 65, 85).

12. Séparateur tubulaire (1, 20, 60, 80) selon l'une quelconque des revendications 1 à 11,
**caractérisé en ce**
**que** les pièces d'insertion (45, 65, 85) sont fabriquées dans une matière ayant un coefficient de température qui est supérieur à celui du boîtier de séparateur, de sorte qu'en raison de la dilatation de la matière un centrage et un soutien de la membrane (12) sont effectués.
